# EUROPÄISCHE PATENTSCHRIFT

(11) **EP 1 387 995 B1**
(45) Veröffentlichungstag und Bekanntmachung des Hinweises auf die Patenterteilung: **01.02.2006**
(21) Anmeldenummer: 02719601.3
(22) Anmeldetag: 07.05.2002
(51) Int. Cl.: F28D 20/02

(54) **VERFAHREN ZUR HERSTELLUNG VON TEMPERATURREGULIERENDEN FLÄCHEN MIT LATENTWÄRMESPEICHERMATERIAL**
METHOD FOR PRODUCING TEMPERATURE-REGULATING SURFACES WITH PHASE CHANGE MATERIAL
PROCEDE POUR REALISER DES SURFACES THERMOREGULATRICES AU MOYEN DE MATERIAU REGULATEUR THERMIQUE A CHANGEMENT D'ETAT

(30) Priorität: 18.05.2001 CH 9332001
(43) Veröffentlichungstag der Anmeldung: 11.02.2004
(73) Patentinhaber: Schoeller Textil AG, 9475 Sevelen (CH)
(72) Erfinder: SUTTER, Simon, CH-7000 Chur (CH); LOTTENBACH, Roland, CH-9427 Zelg (CH)
(74) Vertreter: Köpf, Alfred
(86) Internationale Anmeldenummer: PCT/CH2002/000245
(87) Internationale Veröffentlichungsnummer: WO 2002/095314

(56) Entgegenhaltungen:
- WO-A-95/34609
- GB-A- 742 295
- US-A- 4 654 256
- US-A- 5 366 801
- US-A- 6 092 464

## Beschreibung

Die Erfindung betrifft ein Verfahren zur Herstellung von temperaturregulierenden Flächen und/oder Strukturen auf einem Substrat gemäss dem Oberbegriff des ersten Anspruchs sowie Erzeugnisse, auf denen mit diesem Verfahren eine temperaturregulierende Fläche und/oder Struktur angebracht wurde.

Temperaturregulierende Flächen sind allgemein bekannt. Vorzugsweise enthalten diese Latentwärmespeichermaterialien, auch "phase change material" oder PCM genannt. Ein geeignetes PCM besteht beispielsweise aus Paraffin. Bei einer Zu- oder Abfuhr von Energie im Bereich des Schmelzpunktes des PCM behält dieses so lange seine Schmelzpunkttemperatur, bis der Phasenübergang vom festen in den flüssigen Aggregatszustand (oder umgekehrt) abgeschlossen ist, beziehungsweise bis die gesamte Masse den neuen Aggregatszustand angenommen hat. Erst nach Abschluss dieses Phasenüberganges wird die Temperatur bei anhaltender Energiezu- oder -abfuhr entsprechend ansteigen oder sinken. Dieser Effekt wird ausgenutzt um Temperaturen zu regulieren, insbesondere um Gegenstände oder Körper vor Hitze oder Kälte zu schützen oder um eine bestimmte Temperatur eines Gegenstandes oder Körpers konstant zu halten.

In der Textilveredlung werden eine Vielzahl von PCM eingesetzt, wobei aus den Druckschriften US 5,366,801 und US 5,804,297 ein mikroverkapseltes PCM mit einem Polymerbinder bekannt ist, wobei das mikroverkapselte PCM gegebenenfalls in der Herstellung relativ kostenaufwendig ist. Eine andere Form stellt nicht verkapseltes PCM dar, das in einer an eine Struktur gebundene Form verwendet wird. Polymerbinder mit beiden Formen von PCM werden vorzugsweise in waschbeständiger Form eingesetzt. Temperaturregulierende Flächen werden jeweils mittels einer Beschichtung auf ein Textilmaterial angebracht. Solche Beschichtungsverfahren sind in der Textilindustrie, insbesondere in der Textilveredelung hinreichend bekannt.

Aus der GB 742 295 A von 1955 ist ein Verfahren bekannt, welches sich mit thermoplastischer Verformung von Textilien befasst, wobei wärmeisolierende Materialien in Form von Mustern vorübergehend auf ein Textil aufgebracht wird. Durch diese Applikation wird die Wärmeleitung an den behandelten Stellen bei der thermoplastischen Verformung reguliert. Diese Applikationen sind allerdings nicht- und chemischreinigungsbeständig und würden sich beim Gebrauch sehr schnell abtragen.

Um einen genügend grossen Effekt einer lang anhaltenden Temperaturregulierung zu erhalten, muss die entsprechende Wärmekapazität und somit eine entsprechende Menge PCM angebracht werden. Dies resultiert in einer höheren Beschichtungsdicke oder in einer höheren Konzentration des PCM innerhalb der Beschichtung. Sowohl eine höhere Schichtdicke als auch eine höhere Konzentration wirken sich auf den Tragekomfort negativ aus, da die Steifigkeit erhöht und die Atmungsaktivität reduziert wird. Speziell in Verbindung mit semipermeablen Funktionsschichten ist dies ein gravierender Nachteil, da eine Kombination dieser beiden Funktionen - sowohl Temperaturregulierung als auch Atmungsaktivität - wünschenswert ist.

Aufgabe der Erfindung ist es ein Verfahren zu entwickeln, das temperaturregulierende Flächen und/oder Strukturen mit ausreichendem Anteil an PCM auf ein Substrat aufbringt, wobei gleichzeitig die elastischen Fähigkeiten des Substrates sowie eine atmungsaktive und Dampf- und Feuchtigkeitsaustausch gewährleistende Oberfläche weitgehend erhalten bleiben. Weiterhin liegt der Erfindung zugrunde, entsprechende Erzeugnisse mit temperaturregulierenden Flächen zu schaffen, die einen ausreichenden Anteil an PCM enthalten und denen gleichzeitig die elastischen Fähigkeiten sowie die Atmungsaktivität des Substrates und die Dampf- und Feuchtigkeitsaustausch gewährleistende Oberfläche weitgehend erhalten bleiben.

Eine weitere Aufgabe der Erfindung ist es, die Isolationswirkung des Substrates mit der temperaturregulierenden Fläche zu erhöhen und sowohl Herstellungs- und Materialkosten sowie das Gewicht der in der Fläche angebrachten Materialien zu minimieren.

Die Aufgabe hinsichtlich der Herstellung wird durch ein Druckverfahren durch Bildung von Noppen gemäss den Merkmalen im Patentanspruch lund das erfindungsgemässe Erzeugnis durch die Merkmale des Patentanspruches 30 gelöst.

Der Vorteil einer Applikation mittels Druckverfahren besteht in der Möglichkeit, den Druck vorzugsweise nur partiell aufzubringen. Für die somit erhaltenen Flächenabschnitte des Substrates, welche nicht mit dem Druck versehen wurden, bleiben in vorteilhafter Weise die ursprünglichen Eigenschaften, insbesondere die Elastizität, die Atmungsaktivität und die Fähigkeit zur Gewährleistung von Dampf- und Feuchtigkeitsaustausch erhalten.

Damit eine genügend grosse Menge von PCM auf dem Substrat angebracht wird, sind die bedruckten Stellen als Noppen ausgebildet. Dies wird erreicht, indem Schablonen verwendet werden, die eine Wandstärke in der Grössenordnung zwischen 0.6 und 4 mm, vorzugsweise zwischen 0.6 und 2 mm und eine offene Fläche von mindestens 25 %, bevorzugt von mindestens 35 % aufweisen.

Als Latentwärmespeichermaterial oder PCM wird bevorzugt eine kristallierende organische Substanz, beispielsweise ein n-Paraffin mit einem Schmelzpunkt zwischen -10 und 65 °C (n-Docaden bis n-Octacosan) verwendet. Das Paraffin kann in einer an eine poröse Struktur gebundenen Form oder in mikroverkapselter Form in die Polymerdispersion eingebracht werden.

PCM kann beispielsweise an poröse Silikatpulver mit hoher spezifischer Oberfläche gebunden werden; der dabei entstandene Verbund enthält bis zu 60 % PCM und hat die Form eines fliessfähigen Pulvers. Als Verkapselungsmaterial für die PCM enthaltenden Mikrokapseln hat sich Melaminharz bewährt, da es nicht quillt wie zum Beispiel Gelatine. Die Lösungsmittel der Polymerdispersion können Alkohole sein, bevorzugt wird jedoch Wasser verwendet. Der Wasseranteil an der nassen Polymerdispersion soll zwischen 20 und 60 %, bevorzugt zwischen 25 und 40 % sein. Insbesondere ist es von Vorteil, wenn das verwendete Polymer filmbildend, kalt-, warm- oder durch UV-Licht vernetzbar, elastisch, kältezäh, wasch- und chemischreinigungs-beständig ist.

Die PCM enthaltenden Mikrokapseln werden unter ständigem Rühren langsam der wässrigen Dispersion beigegeben. Damit die PCM-Mikrokapseln rascher benetzt werden, kann zusätzlich ein Dispergiermittel zugegeben werden. Steigt die Viskosität durch die Zugabe der PCM enthaltenden Mikrokapseln trotz Dispergiermittel so weit an, dass die Paste nicht mehr rührfähig ist, muss der Wasseranteil erhöht werden. Andererseits sollte die Viskosität der Dispersion im Bereich 80 bis 180 dPa s, bevorzugt 120 bis 160 dPa s (nach Hacke, Prüfspindel 1) sein, damit kein Entmischen auftritt. Wird dieser Wert durch Zugabe von PCM-Mikrokapseln noch nicht erreicht, so wird zusätzlich ein Verdicker zugefügt. Der Binder kann in Form von Monomeren, Oligomeren oder niedermolekularen Polymeren vorliegen, welche bei der Trocknung und/oder Aushärtung polymerisiert oder vernetzt werden. Ein Beimischen von Vernetzern ist nur dann notwendig, wenn sich die Bindersysteme bei höheren Temperaturen nicht selbst vernetzen. Warmvernetzer wie auch Kaltvernetzer sind geeignet. Weitere Beigaben wie Farbstoffe, Bakteriostatika, Flammhemmer oder Duftstoffe können bei Bedarf ebenfalls beigemischt werden. Falls der Druck anschliessend aufgeschäumt werden soll um das Volumen des Drucks zu vergrössern, wird zusätzlich ein Treibmittel beigefügt. Der Trockenanteil der fertigen Polymerdispersion soll einen Anteil von zwischen 30 und 80 % an PCM enthalten. Ein Beispiel einer Polymerdispersion ist in Tabelle 1 gegeben.

**Tabelle 1: Zusammensetzung der Polymerdispersion:**

| | | |
|---|---|---|
| 1000 Teile | Polymerbinder in Lösung oder in wässriger Dispersion | z.B. Dicrylan AS Binder z.B. Acrylate, Polyuretane, Latices oder Silicone, oder Blends oder Copolymerisate derselben Polymere |
| 200 bis 2000 Teile | PCM in gebundener oder mikroverkapselter Form | |
| 0 bis 40 Teile | Dispergier- oder Emulgiermittel | z.B. Invadin PBN, oder Rapidoprint HL |
| 0 bis 30 Teile | Verdickungsmittel | z.B. Dicrylan R |
| | Amoniak zur Anhebung des PH-Wertes | |
| 0 bis 30 Teile | Vernetzer | Warmvernetzer auf Basis Melaminharz, z.B. Lyofix CHN Kaltvernetzer auf Basis Isocyanat, z.B. Tubigard Fix |
| Bei Bedarf 20 bis 100 Teile | Treibmittel | z.B. Mikroprint E-46, Polyacoating |
| Bei Bedarf | Farbstoffe, Bakteriostatika, Klammhemmer, Duftstoffe | |

Als Substrat ist jede bedruckbare Fläche geeignet, insbesondere wird eine Fläche in Form eines Metallbleches, einer Metallfolie, einer Kunststoffplatte- oder Folie, eines Schaumstoffes oder vorzugsweise einer textilen Fläche verwendet. Als sehr geeignet haben sich elastische, textile Flächengebilde, insbesondere bestehend aus einem Gewebe, einer Maschenware oder einem Nonwoven erwiesen. Untersuchungen haben weiterhin ergeben, dass es von Vorteil sein kann, wenn die textile Fläche vorgängig hydrophob ausgerüstet wurde. Einerseits bleibt dadurch der weiche Griff der textilen Fläche erhalten, da das Textil die wässrige Dispersion nicht aufsaugt, andererseits verhindert die Hydrophobierung eines textilen Substrates die Ausbildung einer Trennschicht aus Wasser bei einem Bedrucken mit wässrigen Dispersionen, was zu Haftungsproblemen des Druckes führen kann.

Für den Druck wird erfindungsgemäss ein Schablonendruck angewandt, der mittels Rotationsschablonen oder mittels Flachschablonen durchgeführt wird. Um das erforderliche hohe Auftragsgewicht von 200 bis 500 g/m2 Trockensubstanz der Polymerdispersion mit dem Druck zu erzielen, ist unter Berücksichtigung der Schablonengeometrie eine Feinabstimmung von Pastenviskosität zum Rakeldruck und zum Substratabstand erforderlich. Der Schablonen-Anpressdruck ist nicht oder nur indirekt massgebend für die Bestimmung des Auftragsgewichtes. Das durch den Druck auf dem Substrat angebrachte PCM soll mindestens 80 g/m2, vorzugsweise 100 bis 300 g/m2 betragen.

Das frisch bedruckte Substrat wird zum Entfernen des Lösungsmittels, beispielsweise das Wassers, anschliessend durch eine Trocknungseinrichtung geführt. Je höher der Feststoffgehalt der PCM enthaltenden Dispersion ist, desto weniger Zeit und Energie wird für die Trocknung benötigt. Werden temperaturaktivierte Warmvernetzer eingesetzt oder handelt es sich um ein selbstvernetzendes Bindersystem, so muss in der Trocknungsanlage zugleich die Reaktionstemperatur von typischerweise 120 bis 150 °C erreicht werden. Beim Einsatz von UV Vernetzern wird anschliessend an die Trocknung der Druck bestrahlt, um die Reaktion zu starten. Wird ein Treibmittel zur Verschäumung eingesetzt so sollte es unter den gewählten Trocknungs- oder Kondensationsbedingungen ebenfalls aktiviert werden, damit der Druck in der gewünschten Enddicke vernetzt wird.

Es besteht weiterhin die Möglichkeit, die Polymerdispersion gleichzeitig als Kleber für eine Laminierung zu verwenden. In diesem Fall wird noch vor dem Durchgang durch die Trocknungsanlage auf den noch nassen Druck eine Decklage, zum Beispiel ein Gewebe, eine Maschenware oder ein Nonwoven, gelegt.

Nach dem Durchgang durch die Trocknungsanlage ist der Druck soweit ausgehärtet, dass das Substrat gerollt oder gestapelt werden kann, ohne dass das Motiv verwischt, verschmiert oder zerstört wird, beziehungsweise die Ware ungewollt zusammenklebt oder ein aufgeschäumter Druck wieder flach gepresst wird.

Der Vorteil dieses Verfahrens besteht darin, dass dadurch relativ grosse Mengen an PCM für den langanhaltenden Effekt der Temperaturregulierung gespeichert werden können, ohne dass dadurch die Elastizität des bedruckten Substrates massgeblich reduziert wird. Dies wird durch die Anhäufung von grossen Mengen an PCM in den Noppen erreicht. Der nicht bedruckte Bereich des Substrates, demnach der Zwischenraum zwischen den Noppen, behält seine Elastizität und gleichzeitig die Atmungsaktivität sowie die Dampf- und Feuchtigkeitsdurchlässigkeit. Das Substrat wird somit weniger versteift als bei einer vollflächigen Beschichtung und behält die gewünschte Anschmiegsamkeit. Da die einzelnen Noppen nicht miteinander verbunden sind wirken diese nicht versteifend. Insgesamt kann so der PCM-Anteil am Binder erhöht werden und das Erzeugnis gewährleistet ein besseres Verhältnis der PCM-Masse zur Gesamtdicke, zum Gesamtgewicht und zu den Herstellungs- und Materialkosten.

Ein anderer positiver Effekt dieses Verfahrens ist die bessere Isolationswirkung des Substrates mit dem Druck, speziell wenn eine weitere Decklage auf den Noppen appliziert wurde. Die zwischen den Lagen und den Noppen eingeschlossene Luft trägt zur Isolation des Erzeugnisses bei, ohne zusätzliches Gewicht durch Isolationsmaterialien in das Erzeugnis einbringen zu müssen und demnach ohne weitere Herstellungs- und Materialkosten aufwenden zu müssen.

Ein weiterer Vorteil dieses Verfahrens besteht in der Möglichkeit, den Druck nur selektiv, an ausgewählten Stellen anzubringen. Der Druck wird beispielsweise gemäss Druckkonturen einer Schnittmustervorlage für eine Konfektionierung selektiv angebracht. Der Vorteil dieser Anwendung liegt nicht nur in der Gewichts- und Kostenersparnis durch Verhinderung von Anbringung eines Druckes auf ein Gebiet eines Substrates, das später nicht verwendet wird, es ist zudem auch vorteilhaft bei der Konfektionierung. Bei Nähten und Säumen tritt kein Auftragen einer zweiten Schicht des Druckes auf. Dies wirkt sich auch positiv auf die fertig konfektionierten Kleidungsstücke aus, die eine gleichmässig dicke Schicht aufweisen, insbesondere auch in den Saum- und Faltenbereichen.

Weitere bevorzugte Möglichkeiten durch den Druck ergeben sich bei einer regional unterschiedlichen Abdeckfläche des Druckes beziehungsweise der Noppen auf dem Substrat. In Bereichen von Kleidungsstücken, die partiell unterschiedliche Anforderung an die Elastizität, an die Atmungsaktivität, den Wasserdampfdurchgangswidertand und/oder an den PCM Anteil haben, wird partiell ein unterschiedlicher Druck angebracht bezüglich Noppenhöhe, Verhältnis bedruckte und unbedruckte Fläche und Konzentration des PCM in der Dispersion. Für Drucke mit verschiedenen Rezepturen wird der Druckvorgang mit einer den Anforderungen angepassten Rezeptur wiederholt durchgeführt.

Speziell die Luftzirkulation zwischen den Noppen und den die Noppen begrenzenden Lagen fördert den Gasaustausch durch natürliche Konvektion und trägt somit zum Tragekomfort des Kleidungsstückes bei.

Eine weitere Möglichkeit des selektiven Druckes besteht in der Anbringung von speziellen Designs wie Schriftzügen, Logos, Figuren oder dergleichen sowie die Beimischung verschiedener Farben zur optischen Gestaltung. Weitere Funktionen werden dem Druck durch ein Beimischen von Bakteriostatika oder von einem Flammenschutz beigefügt.

Eine weitere Möglichkeit besteht im Anbringen des Druckes auf bereits mindestens teilweise konfektionierten Textilen. So wird gezielt in den erforderlichen Bereichen eines textilen Gegenstandes der Druck mit der gewünschten Spezifikation angebracht, wiederum ohne Verlust und mit der Gewährleistung, dass die Nähte nicht auftragen und dass der Druck sparsam und effizient angebracht wird.

Ein weiterer Vorteil des erfindungsgemässen Verfahrens stellen die somit erzeugten Noppen dar, wenn diese eine auf Abrieb empfindlichen Lage, beispielsweise einer Lage mit einer semipermeablen Beschichtung, durch Distanzhaltung vor Abrieb schützen. Die erzeugten Noppen werden im noch feuchten Zustand an die zu schützende Lage angebracht und mit dieser verklebt, oder der Druck wird direkt auf die zu schützende Lage mit der semipermeablen Membran aufgebracht. Die Luft in den Zwischenräumen gewährleistet die gewünschte Atmungsaktivität und den Dampf- und Feuchtigkeitsaustausch.

## Patentansprüche

1. Verfahren zur Herstellung von temperaturregulierenden Flächen und/oder Strukturen auf einem Substrat, wobei die Flächen und/oder Strukturen in Form eines Druckverfahrens und durch die Verwendung einer Polymerdispersion mit mindestens einem darin eingebrachten Latentwärmespeichermaterial als Drucksubstanz auf das Substrat aufgebracht werden, **dadurch gekennzeichnet, dass** durch das Druckverfahren auf dem Substrat Noppen gebildet werden.

2. Verfahren nach Anspruch 1, **dadurch gekennzeichnet, dass** das Druckverfahren ein Schablonendruck ist, der mittels Rotationsschablonen durchgeführt wird.

3. Verfahren nach Anspruch 1, **dadurch gekennzeichnet, dass** das Druckverfahren ein Schablonendruck ist, der mittels Flachschablonen durchgeführt wird.

4. Verfahren nach Anspruch 2 oder 3, **dadurch gekennzeichnet, dass** Schablonen mit einer Wanddicke in der Grössenordnung von 0.6 bis 4 mm, vorzugsweise von 0.6 bis 2 mm verwendet werden.

5. Verfahren nach Anspruch 2 oder 3, **dadurch gekennzeichnet, dass** Schablonen mit einer offenen Fläche von mindestens 25 %, bevorzugt von mindestens 35 % verwendet werden.

6. Verfahren nach Anspruch 1, **dadurch gekennzeichnet, dass** als Latentwärmespeichermaterial eine kristallisierende organische Substanz, bevorzugt ein n-Paraffin mit einem Schmelzpunkt zwischen -10 und 65 °C (n-Dodecan bis n-Octacosan) verwendet wird.

7. Verfahren nach Anspruch 6, **dadurch gekennzeichnet, dass** eine Polymerdispersion, bei welcher das eingebrachte Latentwärmespeichermaterial in einer an eine poröse Struktur gebundene Form vorliegt, verwendet wird.

8. Verfahren nach Anspruch 6, **dadurch gekennzeichnet, dass** eine Polymerdispersion, bei welcher das eingebrachte Latentwärmespeichermaterial in mikroverkapselter Form vorliegt, verwendet wird.

9. Verfahren nach Anspruch 1, **dadurch gekennzeichnet, dass** mit dem Druckverfahren mindestens 80 g/m2, vorzugsweise 100 bis 300 g/m2 des Latentwärmespeichermaterials auf das Substrat aufgebracht wird.

10. Verfahren nach Anspruch 1, **dadurch gekennzeichnet, dass** eine Polymerdispersion mit einem Anteil des Latentwärmespeichermaterials von 30 bis 80 % der getrockneten Dispersion verwendet wird.

11. Verfahren nach Anspruch 1, **dadurch gekennzeichnet, dass** eine Polymerdispersion mit einem Trockensubstanzanteil von zwischen 200 und 500 g/m2 auf das Substrat aufgetragen wird.

12. Verfahren nach Anspruch 1, **dadurch gekennzeichnet, dass** eine Polymerdispersion, deren Lösungsmittel bevorzugt Wasser ist und deren Wasseranteil an der nassen Dispersion zwischen 20 und 60 %, bevorzugt zwischen 25 und 40 % ist verwendet wird.

13. Verfahren nach Anspruch 1, **dadurch gekennzeichnet, dass** eine Polymerdispersion mit einer Viskosität im Bereich von 80 bis 180 dPa s, bevorzugt im Bereich von 120 bis 160 dPa s liegt, verwendet wird.

14. Verfahren nach Anspruch 1, **dadurch gekennzeichnet, dass** in der Polymerdispersion ein Polymer aus der Gruppe der Acrylate, Polyuretane, Styrolbutadien - Latices, Silicone, oder Blends oder Copolymerisate derselben Polymere verwendet wird.

15. Verfahren nach Anspruch 1, **dadurch gekennzeichnet, dass** als Polymerdispersion ein filmbildendes, kalt-, warm- oder durch UV-Licht vernetzbares, elastisches, kältezähes, wasch- und chemischreinigungsbeständiges Polymer verwendet wird.

16. Verfahren nach Anspruch 1, **dadurch gekennzeichnet, dass** der Polymerdispersion ein die Verschäumung der bedruckten Flächen bewirkendes Treibmittel zugegeben wird.

17. Verfahren nach Anspruch 1, **dadurch gekennzeichnet, dass** die Polymerdispersion mit einer oder mehreren Zugaben von Farbstoffen, einem Bakteriostatikum oder einem Flammenschutz vermengt wird.

18. Verfahren nach Anspruch 1, **dadurch gekennzeichnet, dass** als Substrat eine bedruckbare Fläche in der Form eines Metallbleches, einer Metallfolie, einer Kunststoffplatte- oder Folie, eines Schaumstoffes oder vorzugsweise einer textilen Fläche verwendet wird.

19. Verfahren nach Anspruch 18, **dadurch gekennzeichnet, dass** als textile Fläche vorzugsweise ein elastisches textiles Flächengebilde, vorzugsweise ein Gewebe, eine Maschenware oder ein Nonwoven verwendet wird.

20. Verfahren nach Anspruch 19, **dadurch gekennzeichnet, dass** als Substrat eine hydrophob ausgerüstete textile Fläche verwendet wird.

21. Verfahren nach Anspruch 1, **dadurch gekennzeichnet, dass** der Druck nur partiell flächendeckend auf das Substrat aufgebracht wird.

22. Verfahren nach Anspruch 21, **dadurch gekennzeichnet, dass** der Druck nur selektiv und an ausgewählten Stellen auf das Substrat aufgebracht wird.

23. Verfahren nach Anspruch 22, **dadurch gekennzeichnet, dass** Druckkonturen an ein Schnittmuster für eine Konfektionierung angepasst werden.

24. Verfahren nach Anspruch 22, **dadurch gekennzeichnet, dass** der Druck auf zumindest teilweise konfektionierte Textilien angebracht wird.

25. Verfahren nach Anspruch 1, **dadurch gekennzeichnet, dass** der Druck auf dem Substrat in zwei oder mehreren unterschiedlichen Dicken angebracht wird.

26. Verfahren nach Anspruch 1, **dadurch gekennzeichnet, dass** der Druck auf demselben Substrat mindestens zweimal nacheinander mit verschiedenen Schablonen durchgeführt wird.

27. Verfahren nach Anspruch 1, **dadurch gekennzeichnet, dass** der Druck in Form eines Designs, eines Logos oder eines Schriftzuges angebracht wird.

28. Verfahren nach Anspruch 1, **dadurch gekennzeichnet, dass** der Druck im feuchten Zustand als Kleber für eine Laminierung mit einer Decklage verwendet wird.

29. Verfahren nach Anspruch 28, **dadurch gekennzeichnet, dass** als Decklage ein textiles Gewebe, eine Maschenware oder ein Nonwoven verwendet wird.

30. Erzeugnis bestehend aus mindestens einer temperaturregulierenden Fläche und/oder Struktur auf einem vorzugsweise textilen Substrat, **dadurch gekennzeichnet, dass** diese Fläche und/oder Struktur nach einem Verfahren gemäss einem der vorangehenden Ansprüche auf das Substrat aufgebracht wurde.

## Claims

1. A method for producing temperature regulating surfaces and/or structures on a substrate, wherein the areas and/or structures are applied on the substrate in the form of a printing method and by use of a polymer dispersion with at least one phase-change material therein as printing substance, **characterized in that** naps are formed on the substrate by means of the printing method.

2. The method according to claim 1 **characterized in that** the printing method is a screen printing method that is carried out by means of rotary screen printing.

3. The method according to claim 1, **characterized in that** the printing method is a screen printing method which is carried out with flat screens.

4. The method according to claim 2 or 3, **characterized in that** screens with a wall thickness in the range from 0.6 to 4 mm, preferably 0.6 to 2 mm, are used.

5. The method according to claim 2 or 3, **characterized in that** screens with an open area of at least 25 %, preferably at least 35 %, are used.

6. The method according to claim 1, **characterized in that** as phase-change material a crystallizing organic substance, preferably an n-paraffin with a melting point between -10 and 65 °C (n-dodecane to n-octacosane), is used.

7. The method according to claim 6, **characterized in that** a polymer dispersion is used, in which the introduced phase-change material is present in bound form in a porous structure.

8. The method according to claim 6, **characterized in that** a polymer dispersion, in which the introduced phase-change material is present in microencapsulated form, is used.

9. The method according to claim 1, **characterized in that** with the printing method at least 80 g/m², preferably 100 to 300 g/m² of the phase-change material is applied onto the substrate.

10. The method according to claim 1, **characterized in that** a polymer dispersion with a proportion of phase-change material of from 30 to 80 % of the dried dispersion is used.

11. The method according to claim 1, **characterized in that** a polymer dispersion with a proportion of drying substance of between 200 and 500 g/m² is applied onto the substrate.

12. The method according to claim 1, **characterized in that** a polymer dispersion whose solvent is preferably water and whose water proportion in the damp dispersion is between 20 and 60 %, preferably between 25 and 40 %, is used.

13. The method according to claim 1, **characterized in that** a polymer dispersion with a viscosity in the range from 80 to 180 dPa s, preferably in the range from 120 to 160 dPa s, is used.

14. The method according to claim 1, **characterized in that** in the polymer dispersion a polymer from the group of acrylates, polyurethanes, styrene-butadiene latexes, silicones, or blends or copolymers of the same polymers, is used.

15. The method according to claim 1, **characterized in that** as polymer dispersion a film-forming cold, hot or UV-light cross-linkable, elastic, cold-toughened, wash- and chemical cleaning -resistant polymer is used.

16. The method according to claim 1, **characterized in that** an effective foaming agent is added to the polymer dispersion to cause foaming of the printed areas.

17. The method according to claim 1, **characterized in that** the polymer dispersion is mixed with one or a plurality of dyestuff additives, a bacteriostat or flame retardant.

18. The method according to claim 1, **characterized in that** as substrate a printable area in the form of a metal sheet, a metal foil, a plastic panel or film, a foam material or preferably a textile surface is used.

19. The method according to claim 18, **characterized in that** as textile surface preferably an elastic textile surface, preferably a textile fabric is used.

20. The method according to claim 19, **characterized in that** as substrate a hydrophobic treated textile surface is used.

21. The method according to claim 1, **characterized in that** the printing is applied so as to only partially cover the substrate area.

22. The method according to claim 21, **characterized in that** the printing is only applied selectively on chosen locations on the substrate.

23. The method according to claim 22, **characterized in that** printing outlines are adapted to a section pattern for assembly line production.

24. The method according to claim 22, **characterized in that** the printing is applied on at least partially assembly line produced textiles.

25. The method according to claim 1, **characterized in that** the printing is applied on the substrate in two or a plurality of different thicknesses.

26. The method according to claim 1, **characterized in that** the printing is carried out on the same substrate at least twice subsequently with different stencils.

27. The method according to claim 1, **characterized in that** the printing is applied in the form of a design, a logo or of lettering.

28. The method according to claim 1, **characterized in that** the printing is used in the moist state as adhesive for lamination with a covering layer.

29. The method according to claim 28, **characterized in that** as covering layer a textile woven fabric, a knitwear or a non-woven is used.

30. A product comprising at least one temperature regulating surface and/or structure on a preferably textile substrate, **characterized in that** this area and/or structure was applied onto the substrate in accordance with one of the preceding claims.

## Revendications

1. Procédé pour la fabrication de surfaces et/ou de structures régulatrices de la température sur un substrat, selon lequel les surfaces et/ou structures sont appliquées sur le substrat sous forme d'un procédé d'impression et par l'utilisation d'une dispersion de polymère avec introduction d'au moins un matériau emmagasinant de la chaleur latente en tant que substance d'impression, **caractérisé en ce que** par le procédé d'impression sur le substrat sont formées des noppes.

2. Procédé selon la revendication 1, **caractérisé en ce que** le procédé d'impression est une impression par chablons qui est réalisée au moyen de chablons rotatifs.

3. Procédé selon la revendication 1, **caractérisé en ce que** le procédé d'impression est une impression par chablons qui est réalisée au moyen de chablons plans.

4. Procédé selon la revendication 2 ou 3, **caractérisé en ce que** sont utilisés des chablons ayant une épaisseur de paroi dans un ordre de grandeur allant de 0,6 à 4 mm, de préférence allant de 0,6 à 2 mm.

5. Procédé selon la revendication 2 ou 3, **caractérisé en ce que** sont utilisés des chablons ayant une surface ouverte d'au moins 25 %, de préférence d'au moins 35 %.

6. Procédé selon la revendication 1, **caractérisé en ce qu'**en tant que matériau emmagasinant de la chaleur latente est utilisée une substance organique cristallisable, de préférence une n-paraffine ayant un point de fusion compris entre -10 et 65 °C (n-dodécane à n-octacosane).

7. Procédé selon la revendication 6, **caractérisé en ce qu'**est utilisée une dispersion de polymère, pour laquelle le matériau emmagasinant de la chaleur latente, introduit est présent sous une forme liée à une structure poreuse.

8. Procédé selon la revendication 6, **caractérisé en ce qu'**est utilisée une dispersion de polymère pour laquelle le matériau emmagasinant de la chaleur latente, introduit est présent sous forme micro-encapsulée.

9. Procédé selon la revendication 1, **caractérisé en ce qu'**avec le procédé d'impression sont appliqués sur le substrat au moins 80 g/m², de préférence 100 à 300 g/m² du matériau emmagasinant de la chaleur latente.

10. Procédé selon la revendication 1, **caractérisé en ce qu'**est utilisée une dispersion de polymère ayant une fraction du matériau emmagasinant de la chaleur latente allant de 30 à 80 % de la dispersion sèche.

11. Procédé selon la revendication 1, **caractérisé en ce qu'**est déposée sur le substrat une dispersion de polymère ayant un extrait sec compris entre 200 et 500 g/m².

12. Procédé selon la revendication 1, **caractérisé en ce qu'**est utilisée une dispersion de polymère, dont le solvant est de préférence l'eau et dont la fraction aqueuse dans la dispersion humide est comprise entre 20 et 60 %, de préférence entre 25 et 40 %.

13. Procédé selon la revendication 1, **caractérisé en ce qu'**est utilisée une dispersion de polymère ayant une viscosité située dans le domaine allant de 80 à 180 dPas, de préférence dans le domaine allant de 120 à 160 dPas.

14. Procédé selon la revendication 1, **caractérisé en ce que** dans la dispersion de polymère est utilisé un polymère choisi dans le groupe comprenant les acrylates, les polyuréthanes, les micelles butadiène-styrène, les silicones, ou des mélanges ou des copolymérisats de ces polymères.

15. Procédé selon la revendication 1, **caractérisé en ce qu'**en tant que dispersion de polymère est utilisé un polymère stable aux produits de lavage et aux détergents, résistant au froid, élastique, réticulable à froid, à chaud ou sous lumière UV et formant un film.

16. Procédé selon la revendication 1, **caractérisé en ce qu'**à la dispersion de polymère est ajouté un agent provoquant la formation en mousse polymère des surfaces imprimées.

17. Procédé selon la revendication 1, **caractérisé en ce qu'**à la dispersion de polymère est additionné de manière quantitative un ou plusieurs ajouts de colorants, d'un bactéricide ou d'un ignifugeant.

18. Procédé selon la revendication 1, **caractérisé en ce qu'**en tant que substrat est utilisée une surface imprimable sous la forme d'une tôle métallique, d'une feuille métallique, d'une plaque ou film plastique, d'une mousse polymère ou de préférence d'une surface textile.

19. Procédé selon la revendication 18, **caractérisé en ce qu'**en tant que surface textile est utilisée de préférence une structure textile élastique de surface, de préférence une toile, un écran ou un non-tissé.

20. Procédé selon la revendication 19, **caractérisé en ce qu'**en tant que substrat est utilisée une surface textile rendue hydrophobe.

21. Procédé selon la revendication 1, **caractérisé en ce que** l'impression n'est appliquée qu'en recouvrement partiel sur le substrat.

22. Procédé selon la revendication 21, **caractérisé en ce que** l'impression n'est appliquée sur le substrat que sélectivement et en des emplacements choisis.

23. Procédé selon la revendication 22, **caractérisé en ce que** les contours de l'impression sont ajustés par rapport à un patron prévu pour un processus de confection.

24. Procédé selon la revendication 22, **caractérisé en ce que** l'impression est apportée sur des textiles au moins partiellement confectionnés.

25. Procédé selon la revendication 1, **caractérisé en ce que** l'impression est apportée sur le substrat en deux ou plusieurs épaisseurs différentes.

26. Procédé selon la revendication 1, **caractérisé en ce que** l'impression sur le même substrat est réalisée au moins deux fois à la suite l'une de l'autre avec des chablons distincts.

27. Procédé selon la revendication 1, **caractérisé en ce que** l'impression est apportée sous forme d'un design, d'un logo ou d'un lettrage.

28. Procédé selon la revendication 1, **caractérisé en ce que** l'impression à l'état humide est utilisée comme adhésif pour un contre-collage avec une doublure.

29. Procédé selon la revendication 28, **caractérisé en ce qu'**en tant que doublure est utilisé un tissu textile, un tricot ou un non-tissé.

30. Produit se composant d'au moins une surface et/ou structure sur un substrat textile de préférence, **caractérisé en ce que** cette surface et/ou structure a été appliquée sur le substrat selon l'une des revendications précédentes.
